# EUROPEAN PATENT APPLICATION

(11) **EP 4 138 157 A1**
(43) Date of publication of application: **22.02.2023**
(21) Application number: 21788096.2
(22) Date of filing: 06.04.2021
(51) Int. Cl.: H01M 4/36, H01M 4/505, H01M 4/525

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 16.04.2020 JP 2020073528
(71) Applicant: SANYO Electric Co., Ltd., Daito-shi Osaka 574-8534 (JP)
(72) Inventor: NOMURA, Shun, Osaka-shi, Osaka 540-6207 (JP); MORITA, Koki, Osaka-shi, Osaka 540-6207 (JP); KINOSHITA, Masahiro, Osaka-shi, Osaka 540-6207 (JP); MORIKAWA, Takaharu, Osaka-shi, Osaka 540-6207 (JP)
(74) Representative: Novagraaf International SA
(86) International application number: PCT/JP2021/014563
(87) International publication number: WO 2021/210444

(57) **Abstract**

The purpose of the present disclosure is to provide a positive electrode active material which enables the achievement of a nonaqueous electrolyte secondary battery that has good cycle characteristics. A positive electrode active material for nonaqueous electrolyte secondary batteries according to one embodiment of the present disclosure contains large particles and small particles of a lithium transition metal composite oxide; the large particles are secondary particles that have a volume-based median diameter of from 10 to 25 µm, each of said secondary particles being an aggregate of primary particles that have a diameter of 1 µm or less; and the small particles contain primary particles that are not aggregated, while having a diameter of from 1 to 5 µm.

## Description

### TECHNICAL FIELD

The present disclosure relates to a positive electrode active material for a non-aqueous electrolyte secondary battery and a non-aqueous electrolyte secondary battery.

### BACKGROUND ART

For power sources of portable electronic devices and the like, non-aqueous electrolyte secondary batteries that perform charge and discharge by allowing lithium ions to move between a positive electrode and a negative electrode through a non-aqueous electrolyte are used. In recent years, applications of the non-aqueous electrolyte secondary battery have spread over applications requiring a relatively high capacity, such as on-board and storage, and further higher capacity has been desired. Patent Literature 1 discloses a method of increasing a filling density of a positive electrode mixture layer by using a positive electrode active material in which large particles and small particles are mixed, for higher capacity of the battery.

### CITATION LIST

### PATENT LITERATURE

PATENT LITERATURE 1: Japanese Unexamined Patent Application Publication No. Hei9-306546

### SUMMARY

### TECHNICAL PROBLEM

The battery capacity of the non-aqueous electrolyte secondary battery deteriorates in some cases with repeated charges and discharges due to decomposition of the electrolyte and a side reaction of elution of a transition metal from the positive electrode active material. In particular, a positive electrode active material being small particles has a large specific surface area, and is likely to cause the side reaction. Thus, even when the battery capacity becomes high by using the positive electrode active material in which large particles and small particles are mixed, cycle characteristics deteriorate in some cases due to the side reaction of the small particles. In the art disclosed in Patent Literature 1, inhibition of the deterioration of the cycle characteristics is not considered, and the art still has room for improvement.

It is an advantage of the present disclosure to provide a positive electrode active material that can achieve a non-aqueous electrolyte secondary battery having good cycle characteristics.

### SOLUTION TO PROBLEM

A positive electrode active material for a non-aqueous electrolyte secondary battery of an aspect of the present disclosure includes large particles and small particles of a lithium-transition metal composite oxide, wherein the large particles are secondary particles formed by aggregation of primary particles having a diameter of 1 µm or less, the secondary particles having a median diameter on a volumetric basis of 10 µm to 25 µm, and the small particles include primary particles having a diameter of 1 µm to 5 µm and not aggregating.

A non-aqueous electrolyte secondary battery of an aspect of the present disclosure comprises: a positive electrode including the above positive electrode active material for a non-aqueous electrolyte secondary battery; a negative electrode; and a non-aqueous electrolyte.

### ADVANTAGEOUS EFFECT OF INVENTION

According to the positive electrode active material of an aspect of the present disclosure, a non-aqueous electrolyte secondary battery having a high capacity and good cycle characteristics can be provided.

### BRIEF DESCRIPTION OF DRAWING

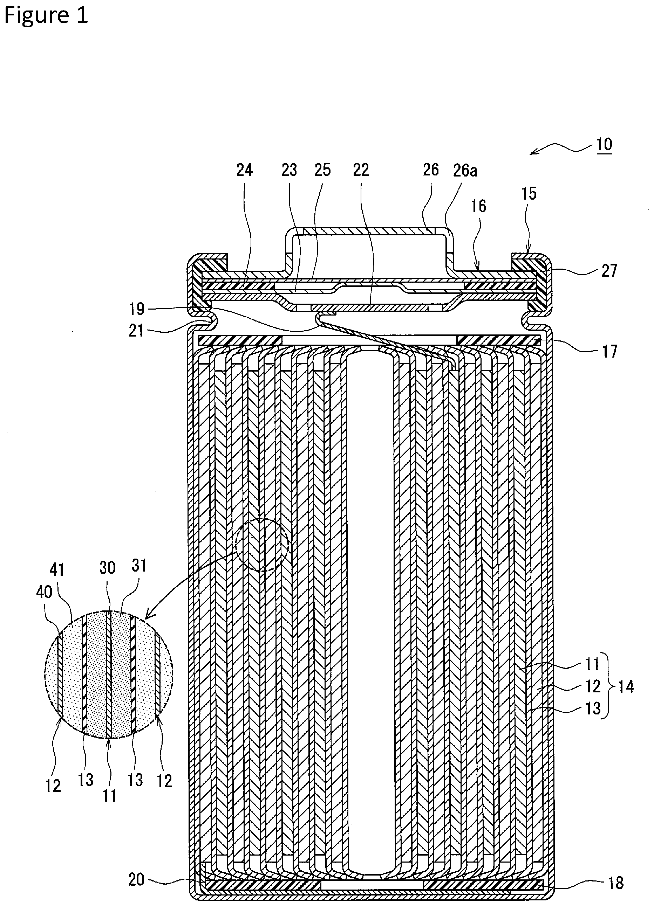

FIG. 1 is an axial sectional view of a non-aqueous electrolyte secondary battery of an example of an embodiment.

### DESCRIPTION OF EMBODIMENTS

Hereinafter, an example of an embodiment of a non-aqueous electrolyte secondary batter according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like, and the exterior may be a pouch composed of laminated sheets including a metal layer and a resin layer.

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An opening end of the upper part of the exterior 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through an outside of the insulating plate 18 toward the bottom side of the exterior 15, and is welded to a bottom inner face of the exterior 15. In the secondary battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a groove 21 formed by, for example, pressing the side wall thereof from the outside to support the sealing assembly 16. The groove 21 is preferably formed in a circular shape along a circumferential direction of the exterior 15, and supports the sealing assembly 16 with the gasket 27 interposed therebetween and with the upper face of the groove 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of centers thereof, and the insulating member 24 is interposed between each of the circumference of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, negative electrode 12, separator 13, and the non-aqueous electrolyte, which constitute the non-aqueous electrolyte secondary battery 10, particularly a positive electrode active material included in the positive electrode 11 will be described in detail.

### [Positive Electrode]

The positive electrode 11 has a positive electrode current collector 30 and a positive electrode mixture layer 31 formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer, and the like may be used. The positive electrode mixture layer 31 includes the positive electrode active material, a conductive agent, and a binder. The positive electrode 11 may be produced by applying a positive electrode mixture slurry including the positive electrode active material, the conductive agent, the binder, and the like on the positive electrode current collector 30, drying the coating film, and then compressing the dried film to form the positive electrode mixture layer 31 on both surfaces of the positive electrode current collector 30.

Examples of the conductive agent included in the positive electrode mixture layer 31 include carbon materials such as carbon black, acetylene black, Ketjenblack, and graphite. Examples of the binder included in the positive electrode mixture layer 31 include fluororesins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like.

The positive electrode mixture layer 31 includes large particles and small particles of a lithium-transition metal composite oxide as the positive electrode active material. Compositions of the large particles and the small particles are not limited as long as they are lithium-transition metal composite oxide, and may be substantially the same. Note that the positive electrode mixture layer 31 may include a positive electrode active material other than the large particles and small particles of the lithium-transition metal composite oxide, described later, within a range not impairing the object of the present disclosure. However, in the present embodiment, only the large particles and small particles of the lithium-transition metal composite oxide are included as the positive electrode active material.

The lithium-transition metal composite oxide may be represented by the general formula LiₐNiₓCo_{y}M_{z}O_{2-b}, wherein 0 < a ≤ 1.2, 0.3 ≤ x ≤ 0.95, 0 ≤ y ≤ 0.3, 0 ≤ z ≤ 0.5, 0 ≤ b < 0.05, x+y+z=1, and M includes at least one or more elements selected from Mn, Zr, Mo, W, Nb, Al, Cr, V, Ce, Ti, Fe, Si, Ga, and In.

The above "a", which represents a proportion of Li to the total number of moles of metal elements excluding Li in the lithium-transition metal compound, may satisfy 0 < a ≤ 1.2. If "a" is more than 1.2, a large amount of a Li compound is added compared with a case where "a" satisfies the above range, and thereby it is not economical from the viewpoint of a manufacturing cost in some cases.

The above "x", which represents a proportion of Ni to the total number of moles of metal elements excluding Li in the lithium-transition metal compound, may satisfy 0.3 ≤ x ≤ 0.95, and may satisfy 0.5 ≤ x ≤ 0.95 to achieve the higher capacity of the battery and to add another metal element.

The above "y", which represents a proportion of Co to the total number of moles of metal elements excluding Li in the lithium-transition metal compound, may satisfy 0 ≤ y ≤ 0.3. Co is an optional component. Since Co is expensive, "y" may satisfy y ≤ 0.2 from the viewpoint of reduction in manufacturing cost.

The above "z", which represents a proportion of M (M includes at least one or more elements selected from Al, Mn, Ti, Mo, W, and Mg) to the total number of moles of metal elements excluding Li in the lithium-transition metal compound, may satisfy 0 ≤ z ≤ 0.5. M is an optional component. M may be Al or Mn.

The large particles of the lithium-transition metal composite oxide are secondary particles formed by aggregation of primary particles having a diameter of 1 µm or less, and the secondary particles have a median diameter on a volumetric basis (hereinafter, referred to as D50) of 10 µm to 25 µm. A relatively small diameter of the primary particles of 1 µm or less and a relatively large D50 of 10 µm to 25 µm can achieve a quick electrode reaction with the large particles, and can form a space among particles of the large particles for filling with the small particles.

The diameter of the primary particles is determined by analyzing a scanning electron microscope (SEM) image of a cross section observed with an SEM. For example, the positive electrode is embedded into a resin, a cross section of the positive electrode mixture layer is produced by cross-section polisher (CP) processing or the like, and this cross section is photographed with the SEM. Alternatively, a powder of the large particles is embedded into a resin, a particle cross section of the large particles is produced by CP processing or the like, and this cross section is photographed with the SEM. Then, from the SEM image of this cross section, 30 primary particles are randomly selected. Particle boundaries of the selected 30 primary particles are observed and the outer shape of the primary particle is specified, then the length of the major diameter (maximum major diameter) of each of the 30 primary particles is determined and the average value thereof is specified as the diameter of the primary particles. The diameter of primary particles of the small particles, described later, can also be measured similarly.

The median diameter on a volumetric basis (D50) of the secondary particles, also referred to as a median diameter, means a particle diameter at which a cumulative frequency is 50% from a smaller particle diameter side in a particle size distribution on a volumetric basis. The particle size distribution of the large particles can be measured by using a laser diffraction-type particle size distribution measuring device (for example, MT3000II, manufactured by MicrotracBEL Corp.) with water as a dispersion medium.

The small particles of the lithium-transition metal composite oxide include primary particles having a diameter of 1 µm to 5 µm and not aggregating. Using the small particles with this range and the above large particles in combination can increase a filling density of the positive electrode active material in the positive electrode mixture layer 31 for the higher capacity of the battery, and can achieve the good cycle characteristics. The above small particles include the primary particles not aggregating even with small particle diameter of the primary particles, and thereby elution of metals such as Ni, Co, Mn, and Al with a charge-discharge cycle and a reaction with the electrolyte can be inhibited. A D50 of the small particles is smaller than the D50 of the large particles, and preferably 3 µm to 7 µm, for example.

In the small particles, a proportion of the primary particles not aggregating is preferably 50 mass% or more, more preferably 60 mass% or more, and particularly preferably 70 mass% or more. When this proportion is 50 mass% or more, the effect of mixing the above large particles and the small particles can be more surely obtained. Since the small particles composed of the primary particles not aggregating are unlikely to cause a phenomenon of cracks of the secondary particles, which is so-called particle cracking, with a charge-discharge cycle, a side reaction with the electrolyte liquid and a break of a conductive path at a particle-cracked portion are unlikely to occur. Thus, in the small particles, the larger the proportion of the primary particles not aggregating, the larger the effect of mixing the above large particles and the small particles.

The proportion of the primary particles not aggregating in the small particles is determined by analyzing an SEM image of a cross section of the positive electrode mixture layer or a cross section of the small particles. Specifically, the proportion of the primary particles not aggregating in the small particles can be calculated with a ratio between an area of the small particles aggregating and an area of the small particles not aggregating in the SEM image of the cross section.

In the positive electrode mixture layer, a mass ratio between the large particles and the small particles is preferably 60:40 to 95:5, more preferably 70:30 to 95:5, and particularly preferably 70:30 to 80:20. When the ratio is within this range, compressibility of the mixture of the large particles and the small particles can be increased for the higher capacity, and the good cycle characteristics can be achieved.

The larger particles and the small particles may be manufactured by a manufacturing method including the following steps:
(1) a step of heat-treating a hydroxide obtained by a coprecipitation method and containing at least Ni to obtain a composite oxide; and
(2) a step of mixing the composite oxide and a lithium compound, and calcining these mixed particles to obtain the lithium-transition metal composite oxide.

In the step (1), for example, with stirring a solution of metal salts including Ni and an optional metal element (such as Co), a solution of an alkali such as sodium hydroxide is added dropwise for regulating the pH to the alkaline side (for example, 8.5 to 12.5) to precipitate (coprecipitate) a transition metal hydroxide including Ni and the optional metal element, and this transition metal hydroxide is heat-treated to obtain a transition metal oxide including Ni and the optional metal element. The temperature of the heat treatment is not limited, and is within a range of 300°C to 600°C, for example. The diameter of the primary particles and the D50 of the secondary particles can be regulated by the coprecipitation condition and the heat-treatment condition. For example, when the large particles are produced, increasing the reaction time of the coprecipitation can result in large diameter of the secondary particles without changes in the diameter of the primary particles. In addition, when the small particles are produced, increasing the pH for a sparse state inside the primary particles can result in large diameter of the primary particles after the step (2).

In the step (2), the composite oxide obtained in the step (1) is mixed with the lithium compound, and then this mixture is calcined. The calcining condition is, for example, a temperature of 700 to 1000°C, and an atmosphere of being under an oxygen flow. When the small particles are produced, a relatively high calcining temperature can change the inside of the primary particles from a sparse state to a dense state, and can result in large diameter of the primary particles. In the step (2), an excess amount of the lithium compound compared with a stoichiometric ratio of the target product is typically used. As the lithium compound, lithium carbonate, lithium hydroxide, lithium nitrate, and lithium sulfate are used, for example. Among them, lithium carbonate and lithium hydroxide are preferable. After the calcination, the lithium-transition metal composite oxide may be crushed and classified to regulate the D50 within a predetermined range, and the obtained lithium-transition metal composite oxide may be washed with water.

### [Negative Electrode]

The negative electrode 12 has a negative electrode current collector 40 and a negative electrode mixture layer 41 formed on both surfaces of the negative electrode current collector 40. For the negative electrode current collector 40, a foil of a metal stable within a potential range of the negative electrode 12, such as copper and a copper alloy, a film in which such a metal is disposed on a surface layer, and the like may be used. The negative electrode mixture layer 41 includes a negative electrode active material and a binder. The negative electrode 12 may be produced by applying a negative electrode mixture slurry including the negative electrode active material, the binder, and the like on the negative electrode current collector 40, drying the coating film, and then compressing the dried film to form the negative electrode mixture layer 41 on both surfaces of the negative electrode current collector 40.

The negative electrode active material is not limited as long as it can reversibly intercalate and deintercalate lithium ions, and carbon materials such as graphite are typically used. The graphite may be any of a natural graphite such as flake graphite, massive graphite, and amorphous graphite, and an artificial graphite such as massive artificial graphite and graphitized mesophase-carbon microbead. For the negative electrode active material, a metal that forms an alloy with Li, such as Si and Sn, a metal compound including Si, Sn, and the like, a lithium-titanium composite oxide, and the like may also be used. For example, a Si-containing material represented by SiOₓ (0.5 ≤ x ≤ 1.6), a Si-containing material in which Si fine particles are dispersed in a lithium silicate phase, represented by Li_{2y}SiO_{(2+y)} (0 < y < 2), or the like may be used in combination with graphite.

For the binder included in the negative electrode mixture layer 41, a fluorine-containing resin such as PTFE and PVdF, PAN, a polyimide, an acrylic resin, a polyolefin, and the like may be used similar to that in the positive electrode 11, but styrene-butadiene rubber (SBR) is preferably used. The negative electrode mixture layer 41 may include CMC or a salt thereof, polyacrylic acid (PAA) or a salt thereof, polyvinyl alcohol (PVA), and the like. The negative electrode mixture layer 41 includes, for example, SBR and CMC or a salt thereof.

### [Separator]

For the separator 13, a porous sheet having an ion permeation property and an insulation property is used. Specific examples of the porous sheet include a fine porous thin film, a woven fabric, and a nonwoven fabric. As a material for the separator, a polyolefin such as polyethylene and polypropylene, cellulose, and the like are preferable. The separator 13 may have a single-layered structure, and may have a multilayered structure. On a surface of the separator 13, a resin layer having high heat resistance, such as an aramid resin, and a filler layer including a filler of an inorganic compound may be provided.

### [Non-Aqueous Electrolyte]

The non-aqueous electrolyte includes a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the above esters include cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

Examples of the above ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and EiN(C₁F₂ₗ₊₁SO₂)(CₘF₂ₘ₊₁SO₂) {l and m represent integers of 0 or more}. As the lithium salt, one of them may be used singly, and a plurality types thereof may be mixed to be used. Among them, LiPF₆ is preferably used from the viewpoints of ion conductivity, electrochemical stability, and the like. A concentration of the lithium salt is, for example, 0.8 mol to 1.8 mol per litter of the non-aqueous solvent.

### EXAMPLES

Hereinafter, the present disclosure will be further described with Examples, but the present disclosure is not limited to these Examples.

### <Example 1>

### [Synthesis of Large Particles A]

With stirring a solution of metal salts including Ni, Co, and Mn, sodium hydroxide was added dropwise for regulating the pH to the alkaline side to precipitate (coprecipitate) Ni_{0.8}Co_{0.1}Mn_{0.1}(OH)₂, and the precipitate was heat-treated to obtain Ni_{0.8}Co_{0.1}Mn_{0.1}O₂. Then, LiOH and Ni_{0.8}Co_{0.1}Mn_{0.1}O₂ were mixed so that a molar ratio of Li to a total amount of Ni, Co, and Mn was 1.1. Thereafter, this mixture was calcined to obtain large particles A. The obtained large particles A, which were secondary particles formed by aggregation of primary particles, had a diameter of the primary particles of 0.5 µm and a D50 of the secondary particles of 17 µm. The composition of the large particles A, which was calculated with ICP emission spectroscopy (using ICP emission spectrometer, iCAP6300, manufactured by Thermo Fisher Scientific K.K.), was Li_{1.05}Ni_{0.8}Co_{0.1}Mn_{0.1}O₂.

### [Synthesis of Small Particles]

With stirring a solution of metal salts including Ni, Co, and Mn, sodium hydroxide was added dropwise for regulating the pH to more alkaline side than the synthesis of the large particles A to precipitate (coprecipitate) Ni_{0.8}Co_{0.1}Mn_{0.1}(OH)₂, and the precipitate was heat-treated to obtain Ni_{0.8}Co_{0.1}Mn_{0.1}O₂. Then, LiOH and Ni_{0.8}Co_{0.1}Mn_{0.1}O₂ were mixed so that a molar ratio of Li to a total amount of Ni, Co, and Mn was 1.1. Thereafter, this mixture was calcined at a higher temperature than that in the synthesis of the large particles A to obtain small particles. The obtained small particles, which included primary particles not aggregating, had a diameter of the primary particles of 5 µm. A proportion of the primary particles not aggregating in the small particles was 70 mass%, and a D50 of the small particles was 5 µm. The composition of the small particles, which was calculated with ICP emission spectroscopy (using ICP emission spectrometer, iCAP6300, manufactured by Thermo Fisher Scientific K.K.), was Li_{1.05}Ni_{0.8}Co_{0.1}Mn_{0.1}O₂.

### [Production of Positive Electrode]

As the positive electrode active material, a mixture of the large particles A and the small particles at a mass ratio of 50:50 was used. 95 parts by mass of the positive electrode active material, 2.5 parts by mass of acetylene black, and 2.5 parts by mass of polyvinylidene fluoride were mixed, and the resultant was mixed with N-methyl-2-pyrrolidone (NMP) to prepare a positive electrode mixture slurry. This slurry was applied on both surfaces of a positive electrode current collector made of aluminum foil with a doctor blade method, the coating film was dried and then rolled with a roller to produce a positive electrode in which positive electrode mixture layers were formed on both surfaces of the positive electrode current collector.

### [Production of Negative Electrode]

98 parts by mass of artificial graphite, 1 part by mass of styrene-butadiene rubber (SBR), and 1 part by mass of carboxymethylcellulose (CMC) were mixed, and the resultant was mixed with water to prepare a negative electrode mixture slurry. This slurry was applied on both surfaces of a negative electrode current collector made of copper foil with a doctor blade method, the coating film was dried and then rolled with a roller to produce a negative electrode in which negative electrode mixture layers were formed on both surfaces of the negative electrode current collector.

### [Preparation of Non-Aqueous Electrolyte]

Into a mixed solvent in which ethylene carbonate (EC) and ethyl methyl carbonate (EMC) were mixed at a volume ratio of 2:8, lithium hexafluorophosphate (LiPF₆) was dissolved at a concentration of 1 mol/L. Furthermore, vinylene carbonate (VC) was dissolved into the above mixed solvent at a concentration of 2.0 mass% to prepare an electrolyte liquid (non-aqueous electrolyte).

### [Production of Secondary Battery]

An aluminum lead was attached to an exposed portion of the positive electrode, a nickel lead was attached to an exposed portion of the negative electrode, the positive electrode and the negative electrode were spirally wound with a separator made of polyolefin interposed therebetween, and then press-formed in the radial direction to produce a flat, wound electrode assembly. This electrode assembly was housed in an exterior composed of an aluminum laminated sheet, the above non-aqueous electrolyte was injected thereinto, and then an opening of the exterior was sealed to obtain a non-aqueous electrolyte secondary battery having a designed capacity of 800 mAh.

### [Evaluation of Tap Density]

As compressibility of the positive electrode active material composed of the mixture of the large particles A and the small particles, a tap density was evaluated. The tap density was calculated by putting a filling flame for connection (approximately 50 mL) on a measuring cylinder with a certain volume (50 mL), introducing 60 g of the negative electrode active material, tapping the measuring cylinder 300 times, and then removing the filling flame, and specifying the mass of the negative electrode active material in the measuring cylinder volume. Specifically, the tap density of the positive electrode active material was measured by using TVP-1A (constant-volume measurer), manufactured by TSUTSUI SCIENTIFIC INSTRUMENTS Co., Ltd.

### [Evaluation of Capacity Maintenance Rate]

Under a temperature environment at 25°C, the above secondary battery was charged at a constant current of 1 C until a battery voltage reached 4.2 V, and charged at a constant voltage of 4.2 V until a current value reached 0.05 C. Then, the secondary battery was discharged at a constant current of 1 C until the battery voltage reached 2.5 V. This charge-discharge cycle was repeated 300 times. A discharge capacity at 1st cycle and a discharge capacity at 300th cycle were determined to calculate a capacity maintenance rate with the following formula.

Capacity Maintenance Rate (%) = Discharge Capacity at 300 Cycle / Discharge Capacity at 1st Cycle × 100

### <Example 2>

A positive electrode active material and a secondary battery were produced and evaluated in the same manner as in Example 1 except that a mixture of the large particles A and the small particles at a mass ratio of 60:40 was used as the positive electrode active material in the production of the positive electrode.

### <Example 3>

A positive electrode active material and a secondary battery were produced and evaluated in the same manner as in Example 1 except that a mixture of the large particles A and the small particles at a mass ratio of 70:30 was used as the positive electrode active material in the production of the positive electrode.

### <Example 4>

A positive electrode active material and a secondary battery were produced and evaluated in the same manner as in Example 1 except that a mixture of the large particles A and the small particles at a mass ratio of 80:20 was used as the positive electrode active material in the production of the positive electrode.

### <Example 5>

A positive electrode active material and a secondary battery were produced and evaluated in the same manner as in Example 1 except that a mixture of the large particles A and the small particles at a mass ratio of 90:10 was used as the positive electrode active material in the production of the positive electrode.

### <Comparative Example 1>

A positive electrode active material and a secondary battery were produced and evaluated in the same manner as in Example 1 except that: the reaction time of the coprecipitation was shortened compared with the synthesis of the large particles A in the synthesis of the large particles to synthesize large particles B having a diameter of primary particles of 0.5 µm and a D50 of secondary particles of 12 µm; and the large particles B were used as the positive electrode active material.

### <Comparative Example 2>

A positive electrode active material and a secondary battery were produced and evaluated in the same manner as in Example 1 except that: the temperature of the heat treatment was lowered with regulating the pH to be lower in the synthesis of the small particles to synthesize small particles having a diameter of primary particles of 0.5 µm and a D50 of secondary particles of 5 µm; and furthermore, a mixture of the large particles A and the small particles at a mass ratio of 80:20 was used as the positive electrode active material.

### <Comparative Example 3>

A positive electrode active material and a secondary battery were produced and evaluated in the same manner as in Example 1 except that the small particles were used as the positive electrode active material in the production of the positive electrode.

Table 1 shows evaluation results of Examples and Comparative Examples. The tap density is shown as a relative value relative to a value in Comparative Example 1 being 100. Table 1 also shows the ratio between the large particles and the small particles.

**[Table 1]**

| | Mixing ratio | | | Evaluation results | |
|---|---|---|---|---|---|
| | Large particles | | Small particles | Tap density | Capacity maintenance rate (%) |
| | A (17µm) | B (12µm) | (5 µm) | | |
| Example 1 | 50 | | 50 | 97 | 91 |
| Example 2 | 60 | | 40 | 102 | 90 |
| Example 3 | 70 | | 30 | 112 | 92 |
| Example 4 | 80 | | 20 | 113 | 92 |
| Example 5 | 90 | | 10 | 110 | 91 |
| Comparative Example 1 | - | 100 | - | 100 | 80 |
| Comparative Example 2 | 80 | - | 20 (Secondary particles) | 115 | 67 |
| Comparative Example 3 | - | - | 100 | 85 | 63 |

The secondary batteries of Examples 1 to 5 had a higher capacity maintenance rate than the secondary batteries of Comparative Examples 1 to 3. The positive electrode active materials of Examples 2 to 5 had larger tap density than that of Comparative Example 1, which had a size between the large particles A and the smaller particles. From this result, it has been confirmed that the positive electrode active material in which the large particles and the small particles are mixed at an appropriate ratio may yield the high capacity and improve the cycle characteristics.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Groove, 22 Filter, 23 Lower vent member, 24 Insulating member, 25 Upper vent member, 26 Cap, 26a Opening, 27 Gasket, 30 Positive electrode current collector, 31 Positive electrode mixture layer, 40 Negative electrode current collector, 41 Negative electrode mixture layer

## Claims

1. A positive electrode active material for a non-aqueous electrolyte secondary battery, including:
large particles and small particles of a lithium-transition metal composite oxide, wherein
the large particles are secondary particles formed by aggregation of primary particles having a diameter of 1 µm or less, the secondary particles having a median diameter on a volumetric basis of 10 µm to 25 µm, and
the small particles include primary particles having a diameter of 1 µm to 5 µm and not aggregating.

2. The positive electrode active material for a non-aqueous electrolyte secondary battery according to claim 1, wherein the small particles have a median diameter on a volumetric basis of 3 µm to 7 µm.

3. The positive electrode active material for a non-aqueous electrolyte secondary battery according to claim 1 or 2, wherein in the small particles, a proportion of the primary particles not aggregating is 50 mass% or more.

4. The positive electrode active material for a non-aqueous electrolyte secondary battery according to any one of claims 1 to 3, wherein a mass ratio between the large particles and the small particles is 60:40 to 95:5.

5. The positive electrode active material for a non-aqueous electrolyte secondary battery according to any one of claims 1 to 4, wherein the lithium-transition metal composite oxide is represented by the general formula LiₐNiₓCo_{y}M_{z}O_{2-b}, wherein 0 < a ≤ 1.2, 0.3 ≤ x ≤ 0.95, 0 ≤ y ≤ 0.3, 0 ≤ z ≤ 0.5, 0 ≤ b < 0.05, x+y+z=1, and M includes at least one or more elements selected from Mn, Zr, Mo, W, Nb, Al, Cr, V, Ce, Ti, Fe, Si, Ga, and In.

6. A non-aqueous electrolyte secondary battery, comprising:
a positive electrode including the positive electrode active material for a non-aqueous electrolyte secondary battery according to any one of claims 1 to 5;
a negative electrode; and
a non-aqueous electrolyte.
